# EUROPÄISCHE PATENTSCHRIFT

(11) **EP 0 631 926 B1**
(45) Veröffentlichungstag und Bekanntmachung des Hinweises auf die Patenterteilung: **21.08.1996**
(21) Anmeldenummer: 94109373.4
(22) Anmeldetag: 17.06.1994
(51) Int. Cl.: B62D 55/104

(54) **Raupenkettenfahrwerk**
Endless track unit
Ensemble de roulement à chenilles

(30) Priorität: 30.06.1993 US 85212
(43) Veröffentlichungstag der Anmeldung: 04.01.1995
(73) Patentinhaber: DEERE & COMPANY, Moline, Illinois 61265 (US)
(72) Erfinder: Nagorcka, James Arthur, Tarrington 3301, Victoria (AU)
(74) Vertreter: Feldmann, Bernhard

(56) Entgegenhaltungen:
- EP-A- 0 052 417
- DE-C- 497 672
- DE-C- 541 889
- FR-A- 471 468
- US-A- 2 386 620
- US-A- 2 467 947
- US-A- 3 841 424

## Beschreibung

Die Erfindung betrifft ein Raupenkettenfahrwerk mit einem Hauptantriebsrad, einem ersten und einem zweiten Umlenkrad, einer Laufkette, einem um ein Kipplager schwenkenden Kipprahmen, einem an dem Kipprahmen schwenkbar befestigten Lenker zur drehbeweglichen Aufnahme eines Umlenkrades und mit einem Arm zur drehbeweglichen Aufnahme des zweiten Umlenkrads.

Aus der US-A-2,467,947 geht ein Raupenkettenfahrwerk mit einem Hauptantriebsrad und zwei Umlenkrädern, die gemeinsam von einer Laufkette umschlungen werden, für einen Ackerschlepper hervor. Ein mittig gelagerter Kipprahmen trägt einenends ein Umlenkrad und anderenends einen zweiarmigen Lenker. Ein Arm des Lenkers trägt über eine teleskopische Spannvorrichtung das verbleibende Umlenkrad, und der andere Arm trägt eine drei Gleisrollen gemeinsame Brücke.

Die US-A-3,841,424 offenbart ein Raupenkettenfahrwerk, das symmetrisch aufgebaut ist und eine Laufkette enthält, die um ein Hauptantriebsrad und zwei Umlenkräder geschlungen ist. Ein auf einem Kipplager vertikal schwenkbar gelagerter Kipprahmen trägt beidenends jeweils einen zweiarmigen Lenker, an dessen einem Arm ein Umlenkrad und an dessen anderem Arm eine Brücke mit zwei Gleisrollen aufgehängt ist. Zwischen dem jeweils zweiten Arm und dem Kipprahmen erstreckt sich ein Gummipuffer.

Die der Erfindung zugrunde liegende Aufgabe wird darin gesehen, ein Raupenkettenfahrwerk vorzuschlagen, das ausreichend flexibel beim Überfahren eines Hindernisses ist und das Gewicht des von ihm getragenen Fahrzeugs bestmöglich auf die verbleibenden Tragelemente des Raupenkettenfahrwerks überträgt.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird das Gewicht jeweils auf das Umlenkrad verlagert, das sich gerade auf dem Boden abstützt, wobei mittels der Federung Stöße auf das gesamte Raupenkettenfahrwerk vermieden werden.

Mittels der Ausbildung des Arms als teleskopischer Spannarm ist es möglich, die Laufkette stets gespannt zu halten.

Die Verwendung einer oder mehrerer Gleisrollen, gegebenenfalls bei gemeinsamer Lagerung auf einer kippbaren Brücke, ermöglicht es, die Spanne zwischen den beiden Umlenkrollen zu überbrücken und somit das Gewicht auf eine größere Bodenfläche zu verteilen, was den Bodendruck reduziert.

Die Verwendung kippbarer Brücken, die ihrerseits wiederum an schwenkbaren Lenkern aufgehängt sind, gewährleistet ein hohes Maß an Bodenanpassung bei gleichzeitiger großflächiger Gewichtsverteilung auf den Boden, der somit geschont wird.

In der Zeichnung ist ein nachfolgend näher beschriebenes Ausführungsbeispiel der Erfindung dargestellt. Es zeigt:
- Fig. 1: ein landwirtschaftlich nutzbares Fahrzeug mit einem Raupenkettenfahrwerk in Seitenansicht und
- Fig. 2: das Raupenkettenfahrwerk in einer vergrößerten Darstellung ebenfalls in Seitenansicht.

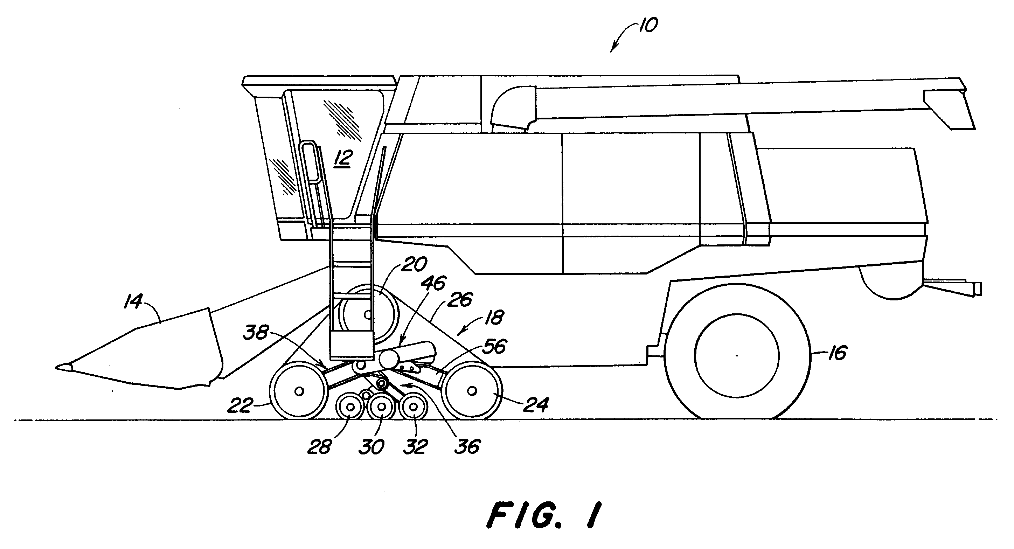

Ein in Figur 1 gezeigtes landwirtschaftlich nutzbares Fahrzeug 10 ist als Mähdrescher ausgebildet und weist eine Fahrerkabine 12, eine Erntebergungsvorrichtung 14, rückwärtige, lenkbare Räder 16 und ein Raupenkettenfahrwerk 18 auf, das als Halb- oder Teil-Raupenkettenfahrwerk ausgebildet ist und das Fahrzeug 10 fortbewegt. Die vorliegende Erfindung wird im Zusammenhang mit einem Raupenkettenfahrwerk als Teilfortbewegungsmittel für einen Mähdrescher beschrieben, für den es teilweise angepaßt und dienlich ist. Allerdings kann diese Erfindung in einer Vielzahl anderer Fahrzeuge mit Raupenkettenfahrwerk eingesetzt werden.

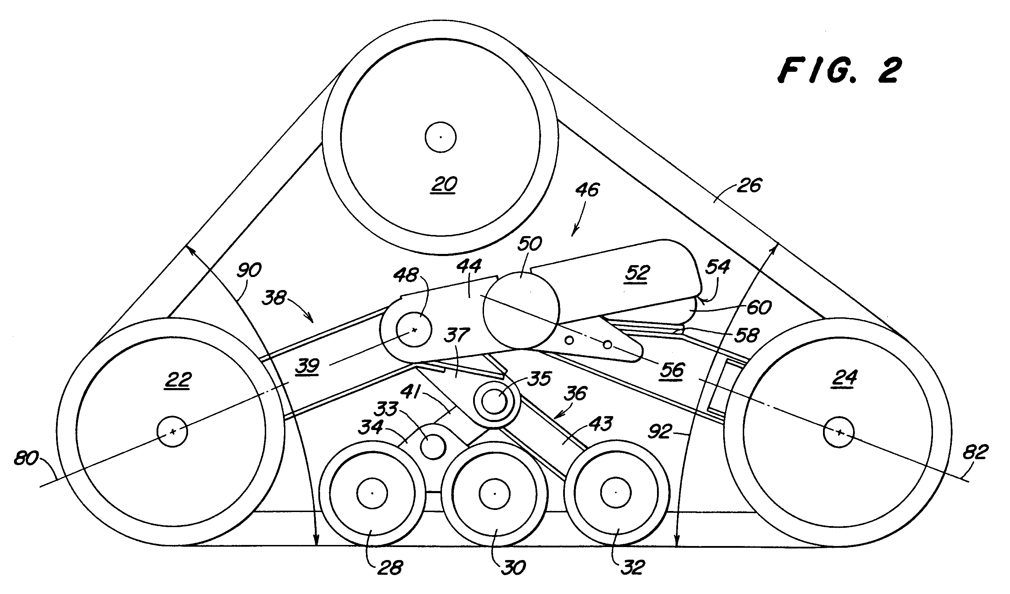

Das Raupenkettenfahrwerk 18 ist am besten aus Figur 2 ersichtlich und enthält ein Hauptantriebsrad 20, ein vorderes oder erstes Umlenkrad 22 und ein rückwärtiges oder zweites Umlenkrad 24, die jeweils Umlenkachsen definieren. Eine Laufkette 26 umgibt die Umlenkräder 22, 24 und das Hauptantriebsrad 20. Die Laufkette 26 ist mit Zentrierzapfen, - bolzen oder dergleichen versehen, die in das Hauptantriebsrad 20 eingreifen, um von diesem mit dem Fahrzeug 10 in Bewegung versetzt zu werden.

Die Aufhängung der Laufkette 26 umfaßt drei Gleisrollen 28, 30, 32, von denen eine erste und eine zweite 28 und 30 drehbar an einer Brücke 34 angebracht sind. Die Brücke 34 wird selbst schwenkbar von einem ersten Arm 41 eines abgewinkelten Lenkers 36 in einem Brückengelenk 33 aufgenommen. Der Lenker 36 ist schwenkbar an einen zweiten Arm 37 eines abgewinkelten Lenkers 38 in einem zweiten Armgelenk 35 angeschlossen. Das erste Umlenkrad 22 ist drehbar auf einen ersten Arm 39 des Lenkers 38 aufgesetzt. Die dritte Gleisrolle 32 ist drehbar auf einem zweiten Arm 43 des Lenkers 36 gehalten.

Der abgewinkelte Lenker 38 ist über ein Armgelenk 48 schwenkbar an einem ersten Arm 44 eines Kipprahmens 46 angebracht. Das Armgelenk 48 des abgewinkelten Lenkers 38 befindet sich in dem Treffpunkt des ersten und zweiten Arms 37, 39 des Lenkers 38. Der Kipprahmen 46 ist an einen nicht gezeigten Rahmen schwenkbar angeschlossen, und zwar in einem Kipplager 50. Der genannte Rahmen ist starr an einem Chassis des Fahrzeugs 10 befestigt. Ein zweiter Arm 52 des Kipprahmens 46 erstreckt sich von dem Kipplager 50 aus in die entgegengesetzte Richtung, d. h. am Fahrzeug 10 nach hinten und in der Zeichnung nach rechts, wo er endseitig mit einer Kammer 54 zur Aufnahme einer Feder versehen ist.

Das zweite Umlenkrad 24 ist drehbar auf einen zweiten Arm 56 aufgesetzt, der als Teleskoparm ausgebildet und mit einem nicht gezeigten Hydraulikzylinder versehen ist. Der Hydraulikzylinder fährt das Teleskop aus bzw. zieht es ein, um auf diese Weise die Laufkette 26 zu spannen. Der zweite Arm 56 greift über das Kipplager 50 an dem vorgenannten Rahmen schwenkbar an. Auf den Arm 56 ist eine Federtragplatte 58 montiert.

Eine Feder 60 ist auf die Federtragplatte 58 aufgesetzt und zwischen den zweiten Arm 52 des Kipprahmens 46 und den zweiten Arm 56 eingesetzt, so daß sie sich in die Kammer 54 erstreckt. Die Feder 60 kann aus mehreren gummiartigen Puffern, einem aufblasbaren Druckluftsack oder anderen brauchbaren Federzusammenbauten oder -elementen bestehen.

Die Feder 60 drückt den zweiten Arm 52 des Kipprahmens 46 und den zweiten Arm 56 auseinander und somit den ersten Arm 44 des Kipprahmens 46 nach unten. Da der erste Arm 44 des Kipprahmens 46 schwenkbar an den Lenker 38 angreift, werden auch die Gleisrollen 28, 30, 32 nach unten gedrückt.

Das Armgelenk 48 definiert eine Arm-Gelenk-Achse. Eine erste gedachte Linie 80 durch die Achse des ersten Umlenkrades 22 und die Arm-Gelenk-Achse teilt einen ersten Winkel 90, der von einem ersten Abschnitt der Laufkette 26 zwischen dem ersten Umlenkrad 22 und dem Hauptantriebsrad 20 und einem zweiten Abschnitt zwischen dem ersten und dem zweiten Umlenkrad 22, 24 bestimmt wird. In gleicher Weise definiert das Kipplager 50 eine Kipprahmenlagerachse. Eine zweite gedachte Linie 82, die sich durch die Mittenachse des zweiten Umlenkrades 24 und die Kipprahmenlagerachse erstreckt, unterteilt einen zweiten Winkel 92, der von einem zweiten Abschnitt des Raupenwerks 26, der sich zwischen dem zweiten Umlenkrad 24 und dem Hauptantriebsrad 20 erstreckt, und einem Abschnitt zwischen dem ersten und dem zweiten Umlenkrad 22, 24 begrenzt wird.

Während des Betriebs, wenn sich das Fahrzeug 10 vorwärts bewegt und die Laufkette 26 dabei auf ein Hindernis stößt, rollt das vordere Umlenkrad 22 das Hindernis hinauf und schwenkt dabei den Lenker 38 im Uhrzeigerdrehsinn um das Armgelenk 48. Infolgedessen wird der Lenker 36 nach unten gedrückt und überträgt dabei das Gewicht auf die Gleisrollen 28, 30 und 32. Sobald das vordere Umlenkrad 22 das Hindernis überwindet und auf dessen anderer Seite abwärts rollt, während die Gleisrollen 28, 30, 32 das Hindernis hinauf rollen, wird der Lenker 36 nach oben bewegt und somit der Lenker 38 entgegen dem Uhrzeigerdrehsinn um das Armgelenk 48 nach unten geschwenkt. Dabei wird ein Teil des Gewichts zurück auf das vordere Umlenkrad 22 übertragen, wenn die Gleisrollen 28, 30, 32 über das Hindernis rollen. Wenn das rückwärtige Umlenkrad 24 auf das Hindernis trifft, drückt der zweite Arm 56 auf die Feder 60 und bewegt den ersten Arm 44 des Kipprahmens 46 nach unten, wodurch mittels des Lenkers 38 ein Teil des Gewichts auf die vordere Umlenkrolle 22 und die Gleisrollen 28, 30, 32 verlegt wird.

## Patentansprüche

1. Raupenkettenfahrwerk mit einem Hauptantriebsrad (20), einem ersten und einem zweiten Umlenkrad (22) und (24), einer Laufkette (26), einem um ein Kipplager (50) schwenkenden Kipprahmen (46), einem an dem Kipprahmen (46) schwenkbar befestigten Lenker (38) zur drehbeweglichen Aufnahme eines Umlenkrades (22) und mit einem Arm (56) zur drehbeweglichen Aufnahme des zweiten Umlenkrades (24), dadurch gekennzeichnet, daß der Arm (56) um das Kipplager (50) schwenkbar angeordnet ist und sich der Kipprahmen (46) gegenüber dem Arm (56) federnd abstützt.

2. Raupenkettenfahrwerk nach Anspruch 1, dadurch gekennzeichnet, daß der Arm (56) als Teleskoparm ausgebildet und insbesondere mittels eines Hydraulikmotors längenveränderbar ist.

3. Raupenkettenfahrwerk nach Anspruch 1 oder 2, dadurch gekennzeichnet, daß der Lenker (38) als zweiarmiger Winkelhebel ausgebildet ist, an dessen einem Arm (39) das erste Umlenkrad (22) und an dessen anderem Arm (37) eine oder mehrere Gleisrollen (28, 30, 32) angebracht sind.

4. Raupenkettenfahrwerk nach Anspruch 3, dadurch gekennzeichnet, daß bei mehreren Gleisrollen (28, 30, 32) wenigstens zwei Gleisrollen (28, 30) über eine Brücke (34) miteinander verbunden und die Brücke (34) in einem Brückengelenk (33) an dem anderen Arm (37) schwenkbar angelenkt ist.

5. Raupenkettenfahrwerk nach Anspruch 3 oder 4, dadurch gekennzeichnet, daß bei mehreren Gleisrollen (28, 30, 32) ein weiterer zweiarmiger Lenker (36) schwenkbar an dem anderen Arm (37) angebracht ist, der an einem ersten Arm (51) eine Gleisrolle (28, 30) oder die Brücke (34) und an einem zweiten Arm (43) eine weitere Gleisrolle (32) oder Brücke aufnimmt.

## Claims

1. A crawler track unit with a main drive wheel (20), first and second deviating wheels (22) and (24), a running track (26), a tilting frame (46) tilting about a tilt bearing (50), a lever (38) pivotally attached to the tilting frame (46) for rotatably receiving one deviating wheel (22) and an arm (56) for rotatably receiving the second deviating wheel (24), characterized in that the arm (56) is arranged to pivot about the tilt bearing (50) and the tilting frame (46) is resiliently braced relative to the arm (56).

2. A crawler track unit according to claim 1, characterized in that the arm (56) is in the form of a telescopic arm and can be altered in its length in particular by means of a hydraulic actuator.

3. A crawler track unit according to claim 1 or 2, characterized in that the lever (38) is in the form of a two-armed, cranked lever, to one of whose arms (39) is fitted the first deviating wheel (22) and to whose other arm (37) is fitted one or more track rollers (28, 30, 32).

4. A crawler track unit according to claim 3, characterized in that, with a plurality of track rollers (28, 30, 32), at least two track rollers (28, 30) are connected together by a bridge (34) and the bridge (34) is pivotally articulated by a bridge joint (33) to the other arm (37).

5. A crawler track unit according to claim 3 or 4, characterized in that, with a plurality of track rollers (28, 30, 32), a further two-armed lever (36) is fitted pivotally on the other arm (37), which receives a track roller (28, 30) or the bridge (34) on a first arm (51) and receives a further track roller (32) or the bridge on a second arm (43).

## Revendications

1. Châssis à chenilles comportant une roue motrice principale (20), des première et seconde roues de renvoi (22) et (24), une chenille (26), un cadre basculant (46), qui peut basculer autour d'un palier de basculement (50), un levier oscillant (38) fixé de manière à pouvoir basculer au cadre basculant (46) et servant à loger, d'une manière mobile en rotation, une roue de renvoi (22), et un bras (56) servant à loger, avec possibilité de rotation, la seconde roue de renvoi (24), caractérisé en ce que le bras (56) est disposé de manière à pouvoir basculer autour du palier de basculement (50) et que le cadre basculant (46) est supporté élastiquement par rapport au bras (56).

2. Châssis à chenilles selon la revendication 1, caractérisé en ce que le bras (56) est agencé sous la forme d'un bras télescopique et que sa longueur peut être modifiée notamment à l'aide d'un moteur hydraulique.

3. Châssis à chenilles selon la revendication 1 ou 2, caractérisé en ce que le levier oscillant (38) est agencé sous la forme d'un levier coudé à deux bras, sur un bras (39) duquel est montée la première roue de renvoi (22) et sur l'autre bras (37) duquel sont montés un ou plusieurs barbotins (28,30,32).

4. Châssis à chenilles selon la revendication 3, caractérisé en ce que dans le cas de plusieurs barbotins (28,30,32), au moins deux barbotins (28,30) sont reliés entre eux par l'intermédiaire d'un étrier (34) et que les étriers (34) sont articulés au niveau d'une articulation (33), de manière à pouvoir basculer, sur l'autre bras (37).

5. Châssis à chenilles selon la revendication 3 ou 4, caractérisé en ce que dans le cas de plusieurs barbotins (28,30,32), sur l'autre bras (37) est monté, de manière à pouvoir basculer, un autre levier oscillant à deux bras (36), dont un premier bras (51) porte un barbotin (28,30) ou l'étrier (34) et dont l'autre bras (43) porte un autre barbotin (32) ou l'étrier.
